# DEMANDE DE BREVET EUROPEEN

(11) **EP 4 661 226 A1**
(43) Date de publication de la demande: **10.12.2025**
(21) Numéro de dépôt: 25180514.9
(22) Date de dépôt: 03.06.2025
(51) Int. Cl.: H02G 1/14, H01R 4/68, H02G 15/34

(54) **ENSEMBLE DE CABLE SUPRACONDUCTEUR MUNI D'UNE BORNE DE DERIVATION ELECTRIQUE**

(30) Priorité: 04.06.2024 FR 2405864
(71) Demandeur: Nexans, 92400 Courbevoie (FR)
(72) Inventeur: LALLOUET, Nicolas, 62360 Baincthun (FR); ALLAIS, Arnaud, 26140 Saint-Rambert-d'Albon (FR); DELPLACE, Sébastien, 59279 Loon-Plage (FR); LEGRAND, Loïc, 62370 Audruicq (FR)
(74) Mandataire: Cabinet Boettcher

(57) **Abrégé**

L'invention concerne un ensemble de câble supraconducteur (100) muni d'une borne de dérivation électrique (13), comportant une jonction comprenant une jonction électrique (11) et une jonction d'isolation (70) comprenant une paroi interne (7) et une paroi extérieure (7') réalisant une isolation thermique et définissant une chambre de connexion (10) dans laquelle ladite jonction électrique (11) est située. Ladite borne de dérivation électrique (13) est connectée à ladite jonction électrique (11) par une liaison électrique (12) traversant ladite jonction d'isolation (70). La liaison électrique (12) comprend une partie conductrice interne (14) située dans la paroi interne (7) de la jonction d'isolation (70) et une partie conductrice externe (14') située dans la paroi extérieure (7') de la jonction d'isolation (70). La partie conductrice interne (14) est connectée à la jonction électrique (11) et à la partie conductrice externe (14') par des dispositifs de connexion électrique flexible (15,15').

## Description

### Domaine technique et arrière-plan technologique

La présente invention concerne un ensemble de câble supraconducteur muni d'une borne de dérivation électrique et un système électrique comprenant l'ensemble.

Les câbles supraconducteurs permettent de transporter des courants électriques, notamment de forte intensité, avec des sections de câble beaucoup plus faibles que celles des câbles de transport conventionnels composés de conducteurs électriques résistifs, tout en limitant les pertes électriques le long du câble, notamment les pertes par effet Joule, puisque ce phénomène est inexistant dans l'état supraconducteur.

Les sources d'énergie renouvelables, telles que les panneaux photovoltaïques ou les éoliennes, et les piles à combustible, suscitent l'intérêt en vue d'une transition dans la production d'énergie. Cependant, l'énergie délivrée par unité de production d'énergie est relativement faible. Il est donc envisagé de faire fonctionner un grand nombre de tels générateurs en conjonction les uns avec les autres. En vue de relier ces nombreux générateurs avec un réseau électrique, les câbles supraconducteurs sont considérés comme efficaces pour transmettre l'énergie générée avec un courant élevé et de faibles pertes électriques.

Pour collecter l'énergie produite par plusieurs générateurs dans un seul câble supraconducteur, celui-ci doit être muni de plusieurs bornes de dérivation chacune devant être connectée au câble résistif relié à un générateur respectif.

On connait la publication de demande de brevet JP2001006837 qui décrit une structure de dérivation de câble supraconducteur, dans laquelle les extrémités de deux longueurs de câble sont introduites à des extrémités opposées d'une enceinte sous vide pour une connexion électrique entre les deux extrémités de longueurs de câble et une dérivation électrique. La structure de dérivation est sertie sur la connexion électrique entre les deux longueurs de câble, ce qui la rend sensible à des variations de taille ou de position des longueurs de câbles, par exemple dues à un changement de température ou une manipulation des longueurs de câbles.

Il existe donc un besoin pour une structure de dérivation de câble supraconducteur qui permette une gestion améliorée des contraintes thermo-mécaniques liées à l'utilisation de la cryogénie.

### Résumé de l'invention

Pour cela, l'invention propose un ensemble de câble supraconducteur muni d'une borne de dérivation électrique,
ledit ensemble comportant une première longueur de câble et une seconde longueur de câble, chaque longueur de câble comprenant de manière coaxiale un élément supraconducteur, un cryostat, un écran, une enceinte externe définie par une paroi intérieure et une paroi extérieure et réalisant une isolation thermique,
ledit ensemble comportant en outre une jonction de câble comprenant :
   - une jonction électrique réalisant une connexion électrique des éléments supraconducteurs de la première longueur de câble et de la seconde longueur de câble,
   - une jonction d'isolation comprenant une paroi interne et une paroi extérieure réalisant une isolation thermique, ladite jonction d'isolation définissant une chambre de connexion dans laquelle ladite jonction électrique est située,
ladite borne de dérivation électrique étant située sur une face extérieure de la jonction d'isolation et étant connectée à ladite jonction électrique par une liaison électrique traversant de manière étanche ladite jonction d'isolation ;
la liaison électrique comprenant une partie conductrice interne située dans la paroi interne de la jonction d'isolation et une partie conductrice externe située dans la paroi extérieure de la jonction d'isolation, la partie conductrice interne étant connectée d'une part à la jonction électrique par un dispositif de connexion électrique flexible s'étendant à travers la chambre de connexion, et d'autre part à la partie conductrice externe par un dispositif de connexion électrique flexible s'étendant entre la paroi interne et la paroi extérieure de la jonction d'isolation.

Grâce à son architecture, l'ensemble de câble selon l'invention permet une dérivation du câble supraconducteur au niveau de la jonction entre les deux longueurs de câble qui est résiliente. Les dispositifs de connexion électrique flexibles permettent d'absorber une variation de taille ou de position des longueurs de câbles.

Selon un mode de réalisation, la partie conductrice interne, respectivement la partie conductrice externe, de la liaison électrique sont en forme de bague ; la paroi interne de la jonction d'isolation, respectivement la paroi extérieure de la jonction d'isolation, comprenant une partie électriquement isolante de part et d'autre de la bague.

Selon un mode de réalisation, les écrans de la première longueur de câble et la deuxième longueur de câble sont connectés électriquement à la jonction d'isolation.

Selon un mode de réalisation, l'ensemble comprend au moins une borne de dérivation secondaire située sur la face extérieure de la jonction d'isolation et connectée à l'écran de la première longueur de câble ou à l'écran de la deuxième longueur de câble par une liaison électrique traversant de manière étanche ladite jonction d'isolation.

Selon un mode de réalisation, la paroi interne de la jonction d'isolation relie les parois internes des enceintes externes de la première et de la deuxième longueurs de câble et la paroi extérieure de la jonction d'isolation relie les parois extérieures des enceintes externes de la première et de la deuxième longueurs de câble, de manière à réaliser une connexion continue entre les enceintes externes de la première longueur de câble et de la seconde longueur de câble.

Selon un mode de réalisation, l'ensemble comprend une pluralité de premières longueurs de câble et une pluralité de secondes longueurs de câble connectées respectivement par la jonction de câble,
la chambre de connexion de la jonction d'isolation comprenant une pluralité de jonctions électriques connectant respectivement une de la pluralité de première longueur de câble avec l'une de la pluralité de deuxième longueur de câble.

Selon une variante, chaque longueur de câble a sa propre enceinte externe, ou les premières longueurs de câble ont une enceinte externe commune et les secondes longueurs de câble ont une enceinte externe commune.

Selon un mode de réalisation, la jonction de câble comprend un cryostat comportant ladite chambre de connexion,
la dite chambre de connexion étant en liaison fluidique avec le cryostat d'une parmi la première longueur de câble et la deuxième longueur de câble, une paroi étanche isolant la dite chambre de connexion du cryostat de l'autre longueur de câble,
un premier port d'interface de fluide de refroidissement étant situé d'un côté de la paroi étanche et traversant la jonction d'isolation pour déboucher dans la chambre de connexion,
un deuxième port d'interface de fluide de refroidissement étant situé de l'autre côté de la paroi étanche et traversant la jonction d'isolation pour une relation fluidique avec le cryostat de l'autre longueur de câble.

L'invention concerne également un système électrique comprenant :
- un ou plusieurs ensembles de câble supraconducteur muni d'une borne de dérivation selon l'une des revendications précédentes, lesdits ensembles de câble étant en série ;
- un ou plusieurs équipements électriques, respectivement connectés à une borne de dérivation du ou des ensembles de câble supraconducteur, le ou lesdits équipements électriques étant notamment une ou des sources d'énergie renouvelable.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[fig. 1] représente un premier exemple d'ensemble de câble muni d'une borne de dérivation ;
[fig. 2] représente un deuxième exemple d'ensemble de câble muni d'une borne de dérivation ;
[fig. 3] représente un troisième exemple d'ensemble de câble muni d'une borne de dérivation ;
[fig. 4] représente un quatrième exemple d'ensemble de câble muni d'une borne de dérivation ;
[fig. 5] représente un cinquième exemple d'ensemble de câble muni d'une borne de dérivation ;
[fig. 6] représente un sixième exemple d'ensemble de câble muni d'une borne de dérivation;
[fig. 7] représente un septième exemple d'ensemble de câble muni d'une borne de dérivation ;
[fig. 8] représente un huitième exemple d'ensemble de câble muni d'une borne de dérivation;
[fig. 9] représente un neuvième exemple d'ensemble de câble muni d'une borne de dérivation;
[fig. 10] représente un neuvième exemple d'ensemble de câble muni d'une borne de dérivation;
[fig. 11] représente un onzième exemple d'ensemble de câble muni d'une borne de dérivation ;
[fig. 12] représente un système électrique comprenant un exemple d'ensemble de câble muni d'une borne de dérivation.

### Description détaillée

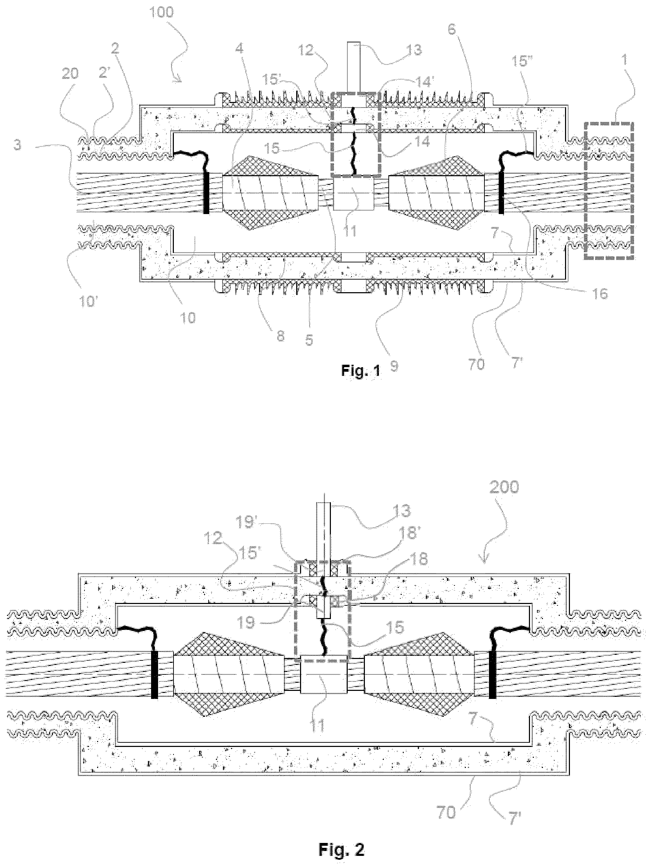

Un premier exemple 100 d'ensemble de câble supraconducteur muni d'une borne de dérivation électrique 13 va être décrit en relation avec la figure 1.

L'ensemble 100 comporte une première longueur de câble 1 et une seconde longueur de câble 1. Chaque longueur de câble 1 comprend de manière coaxiale un élément supraconducteur 5, un cryostat 10', un écran 3, une enceinte externe 20 définie par une paroi intérieure 2 et une paroi extérieure 2'. L'enceinte externe 20 réalise une isolation thermique.

L'ensemble de câble supraconducteur 100 comporte en outre une jonction de câble qui comprend une jonction électrique 11. La jonction électrique 11 réalise une connexion électrique des éléments supraconducteurs 5 de la première longueur de câble 1 et de la seconde longueur de câble 1. La jonction électrique 11 est par exemple en forme d'un manchon, notamment en cuivre, dans lequel l'extrémité de l'élément supraconducteur 5 de la première longueur de câble 1 et l'extrémité de l'élément supraconducteur 5 de la deuxième longueur de câble 1 sont emmanchés, et notamment brasés avec un alliage d'étain.

L'ensemble 100 comprend également une jonction d'isolation 70 qui réalise une isolation thermique. La jonction d'isolation 70 comprend une paroi interne 7 et une paroi extérieure 7' qui définissent une chambre de connexion 10 dans laquelle la jonction électrique 11 est située.

La borne de dérivation électrique 13 est située sur une face extérieure de la jonction d'isolation 70. Elle est connectée à la jonction électrique 11 par une liaison électrique 12 traversant de manière étanche la jonction d'isolation 70. La borne de dérivation électrique 13 permet d'injecter du courant dans l'élément supraconducteur 5 du câble supraconducteur ou d'extraire du courant de celui-ci, notamment depuis ou vers un générateur électrique, notamment une source d'énergie renouvelable. La borne de dérivation électrique 13 et la liaison électrique 12 sont préférentiellement constitués d'un matériau présentant une bonne conductivité électrique tel que le cuivre ou l'aluminium par exemple.

La liaison électrique 12 comprend une partie conductrice interne située dans la paroi interne 7 de la jonction d'isolation 70, et une partie conductrice externe située dans la paroi extérieure 7' de la jonction d'isolation 70. La partie conductrice interne est connectée d'une part à la jonction électrique 11 par un dispositif de connexion électrique 15 s'étendant à travers la chambre de connexion 10. D'autre part, la partie conductrice interne est connectée à la partie conductrice externe par un dispositif de connexion électrique 15' s'étendant entre la paroi interne 7 et la paroi extérieure 7' de la jonction d'isolation 70. Les dispositifs de connexion électrique 15, 15' sont flexibles pour assurer une connexion électrique sans contrainte mécanique ou thermo-mécanique. Par exemple, chaque dispositif de connexion électrique 15, 15' est un conducteur électrique flexible, notamment en forme de fil, de maille de cuivre, de tresse conductrice, de dispositif de lamelles ressort de contact, ou autre.

En particulier, les parties conductrices interne et externe de la liaison électrique 12 sont chacune entourées dans leur paroi respective 7, 7' par une partie électriquement isolante, et sont de préférence fixées mécaniquement et de manière étanche à elles. La partie électriquement isolante est par exemple en céramique, en résine époxy, ou autre.

Notamment, les parois extérieures 2', 7' des enceintes externes 20 de la première longueur de câble 1, de la deuxième longueur de câble 1 et de la jonction d'isolation 70 ont leur face extérieure à température ambiante.

Notamment, les parois internes 2, 7 des enceintes externes 20 de la première longueur de câble 1, de la deuxième longueur de câble 1 et de la jonction d'isolation 70 ont leur face intérieure à la température du fluide cryogénique utilisé, par exemple de l'ordre de -200°C pour l'azote liquide.

Notamment, chaque longueur de câble 1 comprend une couche d'isolant électrique 4 entre l'élément supraconducteur 5 et l'écran 3.

Notamment, chaque longueur de câble 1 comprend un dispositif 6 pour gérer le champ électrique. Le dispositif 6 permet d'éviter un claquage électrique entre l'écran 3, au potentiel de la terre, et l'élément supraconducteur 5 à la tension de fonctionnement du système auquel est rattaché l'ensemble de câble supraconducteur 100. Par exemple, le dispositif 6 a une forme conique et s'étend autour de la couche d'isolant 4 sur une portion dénudée de celle-ci, entre l'extrémité dénudée de l'élément supraconducteur 5 et l'extrémité de l'écran 3.

Notamment, la paroi interne 7 de la jonction d'isolation 70 relie les parois internes 2 des enceintes externes 20 de la première longueur de câble 1 et de la deuxième longueur de câble 1 ; et la paroi extérieure 7' de la jonction d'isolation 70 relie les parois extérieures 2' des enceintes externes 20 de la première longueur de câble 1 et de la deuxième longueur de câble 1. La paroi interne 7 et la paroi extérieure 7' de la jonction d'isolation 70 réalisent alors une connexion continue entre les enceintes externes 20 de la première longueur de câble 1 et de la seconde longueur de câble 1. En réalisant une connexion continue entre les enceintes externes de la première longueur de câble et de la seconde longueur de câble, la jonction d'isolation 70 permet par exemple d'éviter une rupture du vide entre la première longueur de câble et la seconde longueur de câble. Le vide dans ces deux longueurs de câble peut alors être obtenu avec un seul dispositif.

Alternativement, les enceintes externe 20 de la première longueur de câble 1 et de la deuxième longueur de câble 1 sont chacune fermées à leur extrémité respective.

Le premier exemple 100 est selon un **premier mode de réalisation** dans lequel la partie conductrice interne 14 de la liaison électrique 12 est en forme de bague. La paroi interne 7 de la jonction d'isolation 70 comprend une partie électriquement isolante 8 de part et d'autre de la bague 14. La partie conductrice externe 14' de la liaison électrique 12 est en forme de bague. La paroi extérieure 7' de la jonction d'isolation 70 comprend une partie électriquement isolante 9 de part et d'autre de la bague 14'. Les parties électriquement isolantes 8, 9 peuvent être relativement longues pour augmenter l'isolation électrique entre un potentiel électrique de la borne de dérivation 13 et un potentiel électrique auquel est lié le reste de leur paroi respective 7, 7'. Ainsi, le premier mode de réalisation est particulièrement adapté aux applications dans le domaine de la haute tension. Des joints annulaires peuvent être utilisés autour de chaque bague pour garantir une étanchéité avec les parties isolantes. Cependant, dans l'invention, la liaison électrique 12 pourrait être différente, notamment comme dans un **second mode de réalisation** décrit plus loin.

Notamment, la borne de dérivation électrique 13 est d'un seul tenant avec la partie conductrice externe 14'. En particulier, la borne de dérivation 13 s'étend depuis une portion angulaire de la partie conductrice externe 14' en forme de bague.

En particulier, le premier exemple 100 est selon un **troisième mode de réalisation** dans lequel les écrans 3 de la première longueur de câble 1 et de la deuxième longueur de câble 1 sont connectés électriquement à la jonction d'isolation 70. Notamment, la connexion électrique est réalisée par une bague 16 s'étendant autour de l'écran 3 et connectée à lui, et un conducteur électrique 15" reliant la bague 16 à la paroi interne 7 de la jonction d'isolation 70. Le conducteur électrique 15" est de préférence un conducteur flexible tel qu'un fil, une tresse conductrice ou un dispositif de lamelles ressort de contact. Une telle connexion électrique permet de mettre l'écran 3 au même potentiel électrique que la paroi interne 7 de la jonction d'isolation 70. La paroi interne 7 de la jonction d'isolation 70 peut être par ailleurs connectée à une terre électrique. En particulier, grâce aux parties électriquement isolantes 8, 9 la mise à la terre peut être différente entre la première longueur de câble 1 et la seconde longueur de câble 1. Cependant, la liaison électrique entre les écrans 3 des deux longueurs de câble 1 et la jonction d'isolation 70 pourrait être différente. Alternativement, l'ensemble de câble selon l'invention pourrait être dépourvue de liaison électrique entre l'écran 3 et la jonction d'isolation électrique 70, en particulier entre la partie de l'écran 3 comprise dans la jonction de câble et la jonction d'isolation 70.

La figure 2 illustre un deuxième exemple 200 d'ensemble de câble supraconducteur muni d'une borne de dérivation électrique 13. Le deuxième exemple 200 d'ensemble de câble est identique au premier exemple 100, si ce n'est qu'il est selon un **deuxième mode de réalisation** dans lequel la partie conductrice interne 19 de la liaison électrique 12 est en forme de tige traversant la paroi interne 7 de la jonction d'isolation 70. La paroi interne 7 de la jonction d'isolation 70 comprend une partie électriquement isolante 18 qui s'étend autour de la tige. En outre, la partie conductrice externe 19' de la liaison électrique 12 est en forme de tige traversant la paroi extérieure 7' de la jonction d'isolation 70. La paroi extérieure 7' de la jonction d'isolation 70 comprend une partie électriquement isolante 18' qui s'étend autour de la tige. Notamment, la borne de dérivation électrique 13 est d'un seul tenant avec la partie conductrice externe 19'.

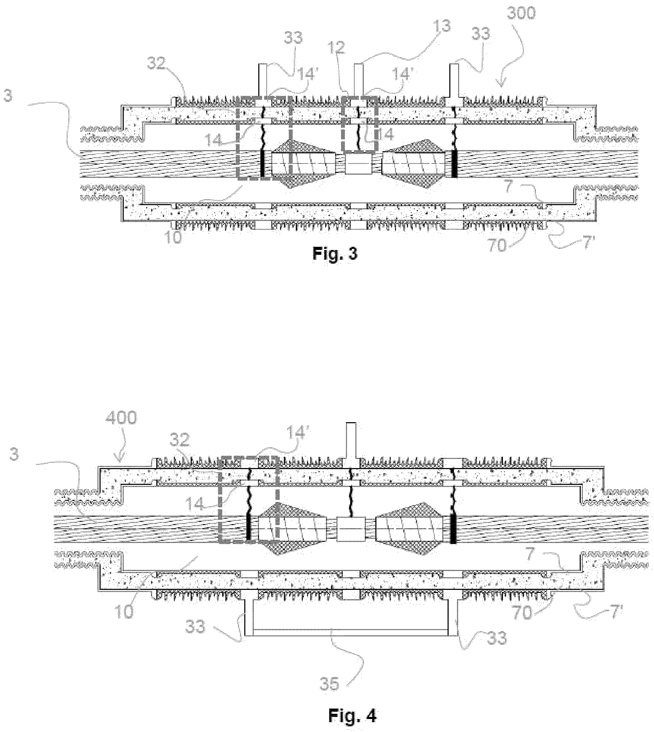

La figure 3 illustre un troisième exemple 300 d'ensemble de câble supraconducteur muni d'une borne de dérivation électrique 13. Le troisième exemple 300 d'ensemble de câble est identique au premier exemple 100, si ce n'est qu'il est selon un **quatrième mode de réalisation** comprenant au moins une borne de dérivation secondaire 33 située sur la face extérieure de la jonction d'isolation 70. Une borne de dérivation secondaire 33 est connectée à l'écran 3 de la première longueur de câble 1 par une liaison électrique 32 traversant de manière étanche la jonction d'isolation 70. De même, une autre borne de dérivation secondaire 33 est connectée à l'écran 3 de la deuxième longueur de câble 1. La borne de dérivation secondaire 33 permet d'injecter du courant dans l'écran 3 de la longueur de câble ou d'extraire du courant de celui-ci, par exemple pour une connexion à une terre électrique. La liaison électrique 32 est par ailleurs identique à la liaison électrique 12 de la borne de dérivation 13 décrite précédemment, désignée par opposition comme « borne de dérivation principale ».

Le troisième exemple 300 est en outre selon le **premier mode de réalisation,** les liaisons électriques 12, 32 de la borne de dérivation principale 13 et de la borne de dérivation secondaire 33 étant identiques. De façon générale, la borne de dérivation 13, 33 peut être située à une position angulaire de la partie conductrice externe 14' en forme de bague différente de la position angulaire de la liaison électrique 12, 32. C'est notamment le cas dans un quatrième exemple 400 illustré en figure 4, qui est par ailleurs identique au troisième exemple 300.

Notamment, les bornes de dérivation secondaires 33 peuvent être reliées électriquement entre elles, par exemple par un conducteur électrique 35. Notamment, le conducteur électrique 35 s'étend à l'extérieur de la jonction d'isolation 70, entre les bornes de dérivation secondaires 33. Cependant, la connexion électrique entre les bornes de dérivation secondaires 33 pourrait être réalisée autrement, par exemple par un conducteur s'étendant à l'intérieur de la chambre de connexion 10, entre les parties conductrices internes 14 des liaisons électriques 32 des bornes de dérivation secondaires 33. En particulier, la connexion électrique entre les bornes de dérivation secondaires 33 permet d'avoir la même connexion de terre entre les deux longueurs de câble supraconducteur 1.

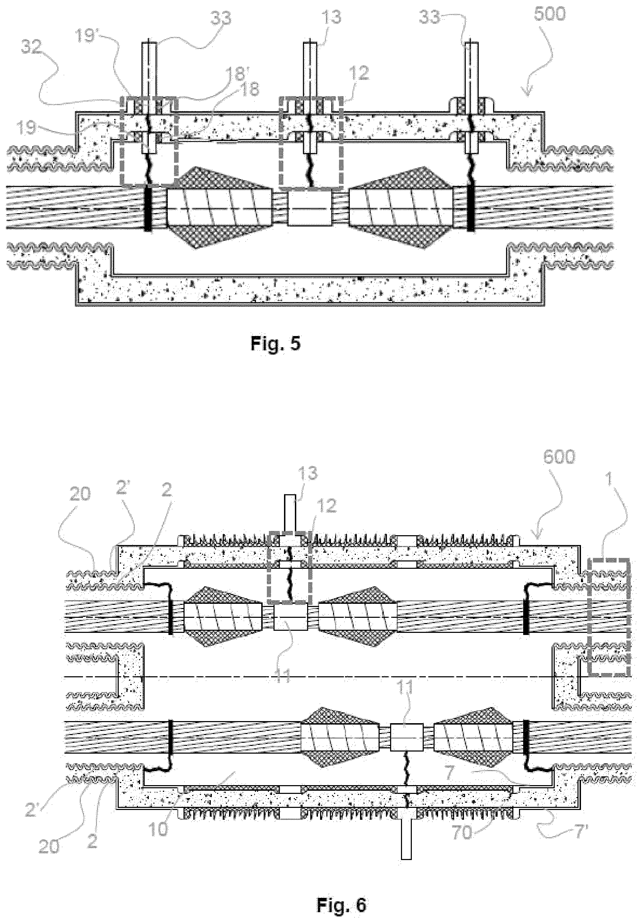

La figure 5 illustre un cinquième exemple 500 d'ensemble de câble supraconducteur muni d'une borne de dérivation électrique 13. Le cinquième exemple 500 d'ensemble de câble est identique au troisième exemple 300, si ce n'est qu'il est selon le **deuxième mode de réalisation,** les liaisons électriques 12, 32 étant identiques.

En particulier, les bornes de dérivation 13, 33 peuvent être alignées entre elles ou pas.

La figure 6 illustre un sixième exemple 600 d'ensemble de câble supraconducteur selon un **cinquième mode de réalisation** qui comprend plusieurs premières longueurs de câble 1 (notamment situées à gauche en figure 6) et plusieurs secondes longueurs de câble 1 (notamment situées à droite en figure 6) connectées respectivement par la jonction de câble. La chambre de connexion 10 de la jonction d'isolation 70 comprend plusieurs jonctions électriques 11 connectant respectivement une des premières longueurs de câble 1 avec une des deuxièmes longueurs de câble 1.

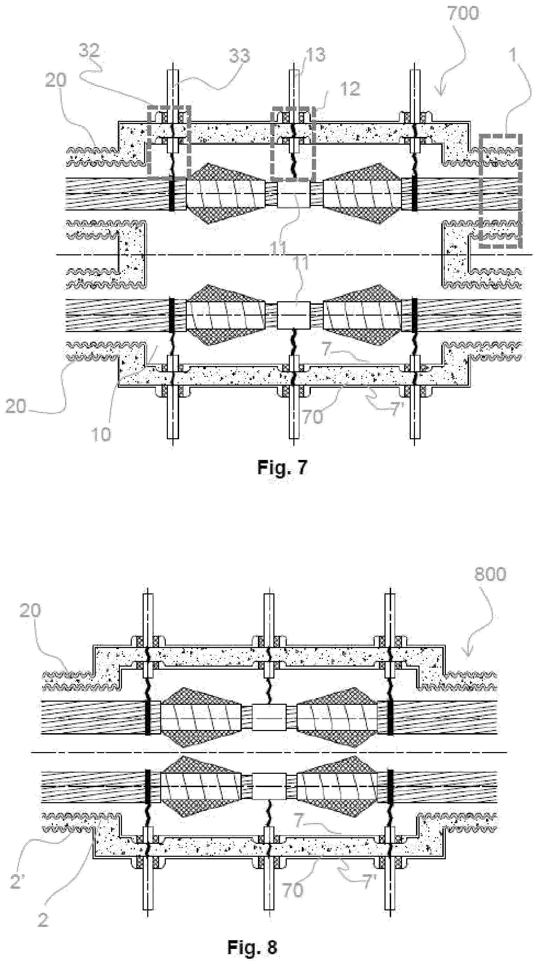

Le **cinquième mode de réalisation** est compatible avec les modes de réalisation précédemment décrits. Notamment, le sixième exemple 600 est en outre selon le **premier mode de réalisation.** La figure 7 illustre un septième exemple 700 d'ensemble de câble supraconducteur selon le **cinquième mode de réalisation.** Notamment, le septième exemple 700 est en outre selon le **deuxième mode de réalisation.** Le septième exemple 700, de même que le sixième exemple 600, peuvent comprendre des bornes de dérivation secondaires 33 selon le **quatrième mode de réalisation.**

En particulier, le sixième exemple 600 et le septième exemple 700 sont selon une **première variante du cinquième mode de réalisation,** dans laquelle chaque longueur de câble 1 a sa propre enceinte externe 20.

La figure 8 illustre un huitième exemple 800 d'ensemble de câble selon une **deuxième variante du cinquième mode de réalisation,** dans laquelle les premières longueurs de câble 1 ont une enceinte externe 20 commune et les secondes longueurs de câble 1 ont une enceinte externe 20 commune. Le huitième exemple 800 d'ensemble de câble est par ailleurs identique au septième exemple 700.

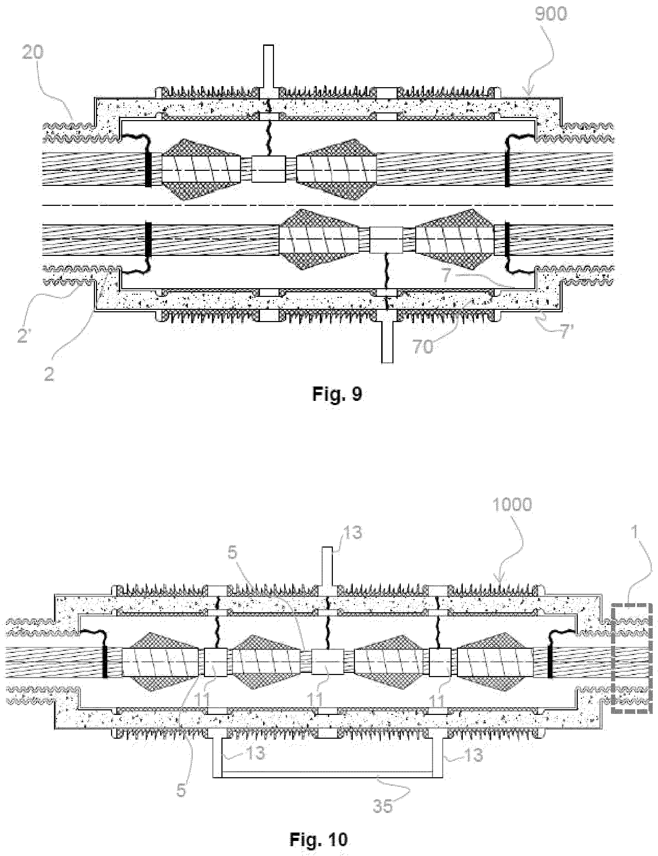

La figure 9 illustre un neuvième exemple 900 d'ensemble de câble selon la **deuxième variante du cinquième mode de réalisation,** dans laquelle les premières longueurs de câble 1 ont une enceinte externe 20 commune et les secondes longueurs de câble 1 ont une enceinte externe 20 commune. Le neuvième exemple 900 d'ensemble de câble est par ailleurs identique au sixième exemple 600.

Notamment, dans les deux variantes du **cinquième mode de réalisation,** les parois internes 2 des enceintes externes 20 des longueurs de câble 1 sont reliées à la paroi interne 7 de la jonction d'isolation 70 ; et les parois extérieures 7' des enceintes externes 20 des longueurs de câble 1 sont reliées à la paroi extérieure 7' de la jonction d'isolation 70.

La figure 10 illustre un dixième exemple 1000 selon un **sixième mode de réalisation** dans lequel la première longueur de câble 1 et la deuxième longueur de câble 1 contiennent chacune plusieurs éléments supraconducteurs 5 coaxiaux. Notamment, chaque élément supraconducteur 5 correspond à une phase d'un signal électrique polyphasé transporté par le câble. Alternativement, un premier élément supraconducteur 5 de la longueur de câble 1 correspond à un potentiel négatif d'un signal électrique continu ; un deuxième élément supraconducteur 5 de la longueur de câble 1 correspond à un potentiel positif d'un signal électrique continu. Les éléments supraconducteurs 5 les plus centraux de la première et de la deuxième longueur de câble 1 sont connectés entre eux directement par la jonction électrique 11 les reliant. Les éléments supraconducteurs 5 périphériques sont connectés entre eux via leurs bornes de dérivation 13 respectives, en particulier par un conducteur électrique 35. Notamment, le conducteur électrique 35 s'étend à l'extérieur de la jonction d'isolation 70 entre les bornes de dérivation 13. Cependant, la connexion électrique entre les bornes de dérivation 13 pourrait être réalisée autrement, par exemple par un conducteur s'étendant à l'intérieur de la chambre de connexion 10, entre les parties conductrices internes 14 des liaisons électriques 12 des bornes de dérivation 13.

Le sixième mode de réalisation est compatible avec les modes de réalisation précédemment décrits. Notamment, le dixième exemple 1000 est en outre selon le **premier mode de réalisation** et le **troisième mode de réalisation.**

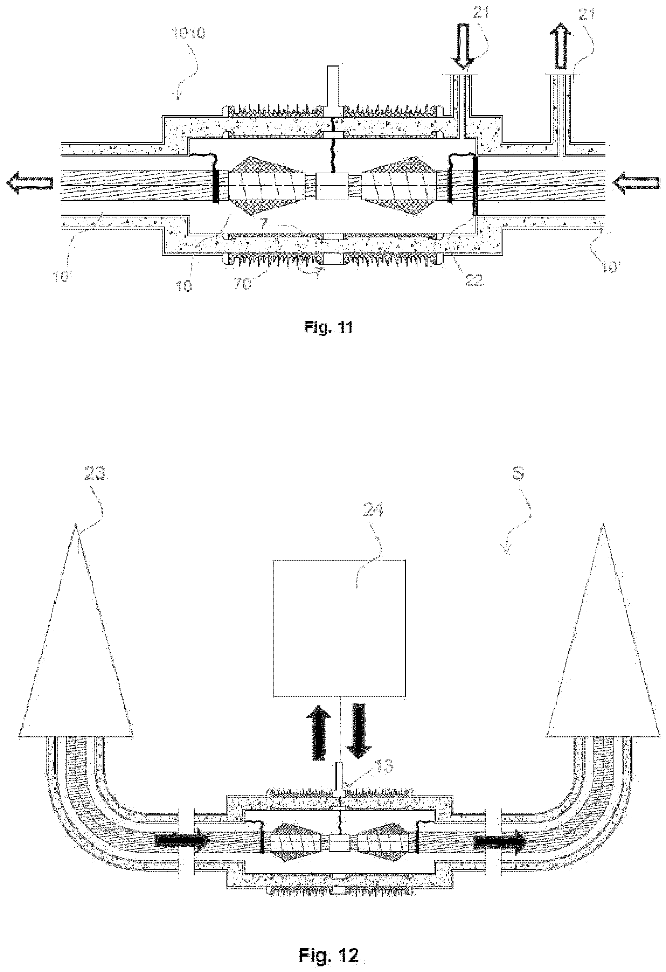

La figure 11 illustre un onzième exemple 1010 selon un **septième mode de réalisation** compatible avec les autres. La chambre de connexion 10 de la jonction d'isolation 70 forme au moins en partie un cryostat configuré pour recevoir un fluide de refroidissement. La chambre de connexion 10 est en liaison fluidique avec le cryostat 10' de la première longueur de câble 1, située notamment à gauche en figure 11. Une paroi étanche 22 isole la chambre de connexion 10 du cryostat 10'de l'autre longueur de câble. Un premier port d'interface 21 de fluide de refroidissement est situé d'un côté de la paroi étanche 22. Le premier port d'interface 21 traverse la jonction d'isolation 70 pour déboucher dans la chambre de connexion 10. Un deuxième port d'interface 21 de fluide de refroidissement est situé de l'autre côté de la paroi étanche 22. Le deuxième port d'interface 21 traverse la jonction d'isolation 70 pour être en relation fluidique avec le cryostat 10' de l'autre longueur de câble.

Notamment, les ports d'interface 21 sont situés sur la face extérieure de la jonction d'isolation 70. Par exemple, le premier port d'interface 21 et le second port d'interface 21 forment respectivement une arrivée de fluide de refroidissement et une sortie de fluide de refroidissement, ou vice-versa. Notamment, le fluide de refroidissement circule dans un circuit fermé, depuis le premier port d'interface 21 vers la première longueur de câble 1 (située notamment à gauche en figure 11), pour revenir par la deuxième longueur de câble 1 (située notamment à droite en figure 11) vers le deuxième port d'interface 21. Par exemple, le fluide de refroidissement sort par l'un des ports d'interface 21, est refroidi et pressurisé dans un système de refroidissement, puis réinjecté par l'autre port d'interface 21. Ceci est particulièrement intéressant pour gérer des systèmes sur de grandes longueurs où peuvent se produire des pertes de pression et des augmentations de température du fluide cryogénique.

La figure 12 illustre un système électrique S qui comprend un exemple d'ensemble de câble supraconducteur muni d'une borne de dérivation 13. Un équipement électrique 24 est connecté à la borne de dérivation 13 de l'ensemble de câble supraconducteur pour un échange de courant avec l'ensemble de câble. L'ensemble de câble peut être en outre relié à des terminaisons 23 à ses extrémités. Notamment, les terminaisons 23 réalisent une connexion avec un réseau électrique classique fonctionnant à température ambiante. L'équipement électrique 24 est par exemple une source d'énergie renouvelable, telle qu'un panneau ou une ferme photovoltaïque ou une éolienne ou un parc éolien. L'équipement électrique 24 peut être un consommateur électrique alimenté par le câble supraconducteur comme par exemple un centre de données (« datacenter » en anglais). Le système électrique S peut comprendre l'un quelconque des exemples d'ensemble de câble précédemment décrits.

De préférence, le système S comprend :
un ou plusieurs ensembles de câble supraconducteur comprenant chacun plusieurs jonctions de câble ayant chacune une borne de dérivation électrique 13 ; plusieurs sources d'énergie renouvelable (comme des panneaux solaires d'une ferme solaire ou des éoliennes d'un parc éolien) chacune électriquement connectée à l'une des bornes de dérivation électrique 13.

Cet agencement facilite le raccordement des sources d'énergie renouvelable au réseau électrique qu'elles alimentent, en particulier lorsque ces sources d'énergie renouvelable appartiennent à une ferme ou un parc.

Dans tous les modes de réalisation ici décrits, la partie conductrice interne 14, respectivement la partie conductrice externe 14', de la liaison électrique 12 peut être en forme de bague coaxiale à la jonction électrique ; la paroi interne 7 de la jonction d'isolation 70, respectivement la paroi extérieure 7' de la jonction d'isolation 70, comprenant une partie électriquement isolante 8, 9, de forme tubulaire coaxiale à la bague, de part et d'autre de la bague.

## Revendications

1. Ensemble de câble supraconducteur (100, 200, 300, 400, 500, 600, 700, 800, 900, 1000,1010) muni d'une borne de dérivation électrique (13),
ledit ensemble comportant une première longueur de câble (1) et une seconde longueur de câble (1), chaque longueur de câble (1) comprenant de manière coaxiale un élément supraconducteur (5), un cryostat (10'), un écran (3), une enceinte externe (20) définie par une paroi intérieure (2) et une paroi extérieure (2') et réalisant une isolation thermique,
ledit ensemble comportant en outre une jonction de câble comprenant :
- une jonction électrique (11) réalisant une connexion électrique des éléments supraconducteurs (5) de la première longueur de câble (1) et de la seconde longueur de câble (1),
- une jonction d'isolation (70) comprenant une paroi interne (7) et une paroi extérieure (7') réalisant une isolation thermique, ladite jonction d'isolation (70) définissant une chambre de connexion (10) dans laquelle ladite jonction électrique (11) est située,
ladite borne de dérivation électrique (13) étant située sur une face extérieure de la jonction d'isolation (70) et étant connectée à ladite jonction électrique (11) par une liaison électrique (12) traversant de manière étanche ladite jonction d'isolation (70) ;
la liaison électrique (12) comprenant une partie conductrice interne (14) située dans la paroi interne (7) de la jonction d'isolation (70) et une partie conductrice externe (14') située dans la paroi extérieure (7') de la jonction d'isolation (70), la partie conductrice interne (14) étant connectée d'une part à la jonction électrique (11) par un dispositif de connexion électrique flexible (15) s'étendant à travers la chambre de connexion (10), et d'autre part à la partie conductrice externe (14') par un dispositif de connexion électrique flexible (15') s'étendant entre la paroi interne (7) et la paroi extérieure (7') de la jonction d'isolation (70) ; la partie conductrice interne (14), respectivement la partie conductrice externe (14'), de la liaison électrique (12) étant en forme de bague ; la paroi interne (7) de la jonction d'isolation (70), respectivement la paroi extérieure (7') de la jonction d'isolation (70), comprenant une partie électriquement isolante (8, 9) de part et d'autre de la bague.

2. Ensemble (100, 600, 900, 1000, 1010) selon la revendication 1, dans lequel les écrans (3) de la première longueur de câble (1) et la deuxième longueur de câble (1) sont connectés électriquement à la jonction d'isolation (70).

3. Ensemble (300, 400) selon l'une des revendications 1 et 2, comprenant au moins une borne de dérivation secondaire (33) située sur la face extérieure de la jonction d'isolation (70) et connectée à l'écran (3) de la première longueur de câble (1) ou à l'écran (3) de la deuxième longueur de câble (1) par une liaison électrique (32) traversant de manière étanche ladite jonction d'isolation (70).

4. Ensemble (100, 300, 400, 600, 900, 1000,1010) selon l'une des revendications précédentes, dans lequel la paroi interne (7) de la jonction d'isolation (70) relie les parois internes (2) des enceintes externes (20) de la première et de la deuxième longueurs de câble(1) et la paroi extérieure (7') de la jonction d'isolation (70) relie les parois extérieures (2') des enceintes externes (20) de la première et de la deuxième longueurs de câble (1), de manière à réaliser une connexion continue entre les enceintes externes (20) de la première longueur de câble (1) et de la seconde longueur de câble (1).

5. Ensemble (600, 900) selon l'une des revendications précédentes, comprenant une pluralité de premières longueurs de câble (1) et une pluralité de secondes longueurs de câble (1) connectées respectivement par la jonction de câble,
la chambre de connexion (10) de la jonction d'isolation (70) comprenant une pluralité de jonctions électriques (11) connectant respectivement une de la pluralité de premières longueurs de câble (1) avec l'une de la pluralité de deuxièmes longueurs de câble (1).

6. Ensemble (600, 900) selon la revendication précédente, dans lequel chaque longueur de câble (1) a sa propre enceinte externe (20), ou les premières longueurs de câble (1) ont une enceinte externe (20) commune et les secondes longueurs de câble (1) ont une enceinte externe (20) commune.

7. Ensemble (1010) selon l'une des revendications précédentes, dans lequel la jonction de câble comprend un cryostat comportant ladite chambre de connexion (10),
la dite chambre de connexion (10) étant en liaison fluidique avec le cryostat (10') d'une parmi la première longueur de câble (1) et la deuxième longueur de câble (1), une paroi étanche (22) isolant la dite chambre de connexion (10) du cryostat (10') de l'autre longueur de câble (1),
un premier port d'interface (21) de fluide de refroidissement étant situé d'un côté de la paroi étanche (22) et traversant la jonction d'isolation (70) pour déboucher dans la chambre de connexion (10),
un deuxième port d'interface (21) de fluide de refroidissement étant situé de l'autre côté de la paroi étanche (22) et traversant la jonction d'isolation (70) pour une relation fluidique avec le cryostat (10') de l'autre longueur de câble (1).

8. Système électrique (S) comprenant :
- un ou plusieurs ensembles de câble supraconducteur muni d'une borne de dérivation (13) selon l'une des revendications précédentes, lesdits ensembles de câble étant en série ;
- un ou plusieurs équipements électriques (24), respectivement connectés à une borne de dérivation du ou des ensembles de câble supraconducteur, le ou lesdits équipements électriques (24) étant notamment une ou des sources d'énergie renouvelable.
